# EUROPEAN PATENT SPECIFICATION

(11) **EP 2 874 883 B1**
(45) Date of publication and mention of the grant of the patent: **02.03.2016**
(21) Application number: 12824775.6
(22) Date of filing: 19.12.2012
(51) Int. Cl.: B64F 1/36, F24F 13/02

(54) **APPARATUS FOR EXTENDING AND RETRACTING A FLEXIBLE AND EXTENSIBLE TUBULAR HOSE**
VORRICHTUNG ZUM AUSFAHREN UND EINFAHREN EINES FLEXIBLEN UND DEHNBAREN SCHLAUCHS
DISPOSITIF D'EXTRACTION ET DE RÉTRACTION D'UN TUYAU FLEXIBLE ET EXTENSIBLE

(30) Priority: 19.07.2012 IT MI20121261
(43) Date of publication of application: 27.05.2015
(73) Proprietor: Marlia, Dante, 20144 Milano (IT)
(72) Inventor: MARLIA, Dante, I-20144 Milano (IT)
(74) Representative: Simino, Massimo
(86) International application number: PCT/IB2012/057473
(87) International publication number: WO 2014/013300

(56) References cited:
- EP-A2- 1 967 758
- EP-A2- 2 085 311
- WO-A1-2011/064808
- US-A1- 2002 121 308

## Description

The present invention relates to an apparatus for extending and retracting a flexible and extensible tubular hose as defined in the preamble of claim 1, particularly a hose for providing air conditioning to an aircraft parked at an airport.

For simplicity, reference will be particularly made herein, without limitation, to an apparatus for supplying conditioned air conditioning to an aircraft parked at an airport.

Apparatus as set forth above have been widely used to supply conditioned air to an aircraft as passengers get on/off board. In this situation, the aircraft engines are generally off and onboard apparatus cannot be used to produce conditioned air. In this state, the required conditioned air flow rate is produced by ground equipment external to the aircraft, and is conveyed into the aircraft cabin by an appropriate tubular hose.

Aircrafts are generally equipped with standard connections for the free end of said tubular hose, whereas the required length of such hose changes from time to time.

In view of the above, the tubular hose is not only required to be flexible but also to be extensible and retractable to be adapted from time to time to the required axial length.

The need that the above apparatus are required to fulfill is to maintain a compact size and a simple construction, thereby allowing easy extension and retraction of the extensible and flexible tubular hose. Such apparatus are also required to provide both proper accommodation to the tubular hose in its axially retracted state and a suitable support for allowing movement of the tubular hose during extension and retraction.

Prior art apparatus, e.g. according to WO 2011/064808, involve the presence of highly complex means for moving the flexible hose which use a large number of rotation axles kinematically coupled by cardan joints. Thus, for proper extension or retraction of the flexible tubular hose, prior art apparatus fully encircle the circumference of the flexible and extensible tubular hose to be moved, which apparently involves an increase of structural complexity and of the size of the apparatus.

The prior art document EP 2085311 teaches to provide a single suitable motor, whose drive shaft directly rotatably drives a first belt drive assembly, as well as further distinct belt drive assemblies with which it is connected by a kinematic transmission that includes a motion transferring chain, such chain being peripherally arranged around a flexible hose to be moved. Here again, the overall structure of the head for extracting the flexible hose is complex and bulky due to the presence of the transfer chain and its peripheral arrangement around the structure that supports the flexible tubular hose.

US 2002/0121308 discloses a device for supplying conditioned air for heating and/or cooling to an aircraft comprising a hose in a container and a retractor. The retractor may engage the hose and pull or retract the hose from or into the container. The device according to US 2002/0121308 has internal drive units 122 positioned around the inner tube 102 in order to axially drive the inner tube 102 which is a flexible inner tube to adjust its position to the position of the drive units 102 since it is not possible to adjust the position of the drive units to the diameter of the tubular hose in view of thermal expansions or to compensate machining tolerances.

The problem at the basis of the present invention is to provide an apparatus for extending and retracting a flexible and extensible hose, that has such structural and functional characteristics as to fulfill the above need, while obviating the above prior art drawbacks.

This problem is solved by an apparatus for extending and retracting a flexible and extensible hose as defined by the features of claim 1.

Further features and advantages of the apparatus for extending and retracting a flexible and extensible hose of the present invention will be apparent from the following description of one preferred embodiment thereof, which is given by way of illustration and without limitation with reference to the accompanying figures, in which:
- Figure 1 is a simplified perspective view of the apparatus of the invention with certain cover panels removed;
- Figure 2 is a lateral plan perspective view of the apparatus of Figure 1 from a different angle;
- Figure 3 is a lateral plan view of the apparatus of Figure 1;
- Figure 4 is a top plan view of the apparatus of Figure 1;
- Figure 5 is a front plan view of the apparatus of Figure 1;
- Figure 6 is a sectional plan view taken along the line VI - VI of Figure 3;
- Figure 7 is a simplified perspective view of the apparatus of the invention according to a different embodiment;
- Figure 8 is a perspective view of the front side of the apparatus of Figure 7 with certain cover panels removed;
- Figure 9 is a perspective view of the extraction head of the apparatus of Figure 7;
- Figure 10 is a front plan view of the apparatus of Figure 7;
- Figure 11 is a simplified perspective view of one of the motor and drive assemblies of the apparatus of the invention and
- Figure 12 is an exploded perspective view of the motor and drive assemblies of Figure 11.

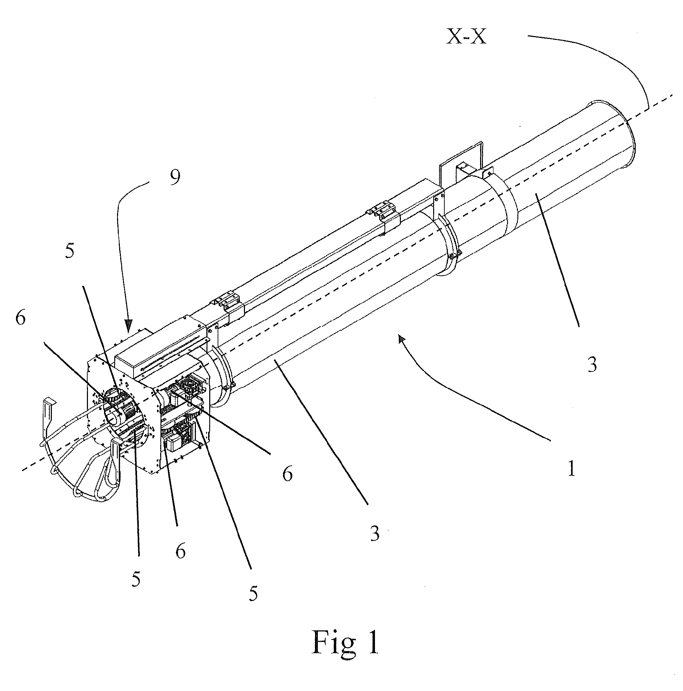

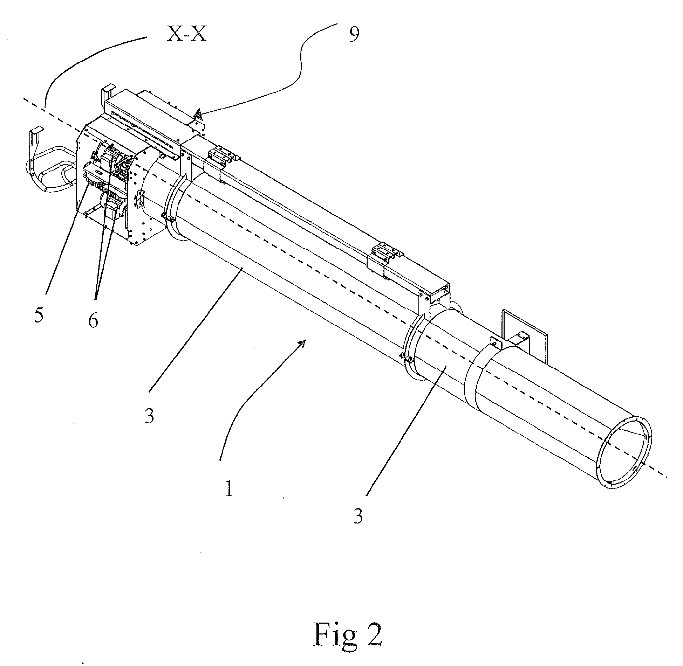

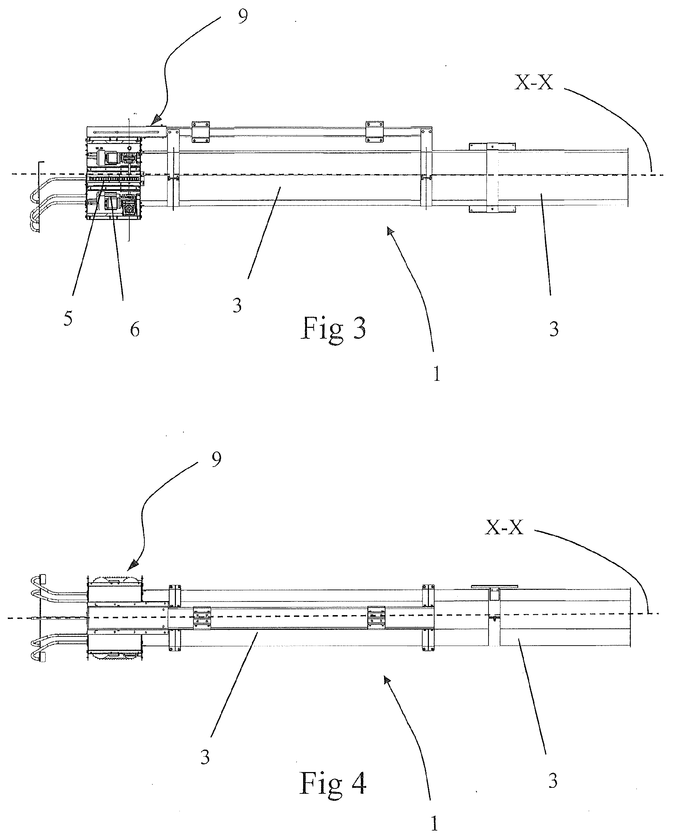

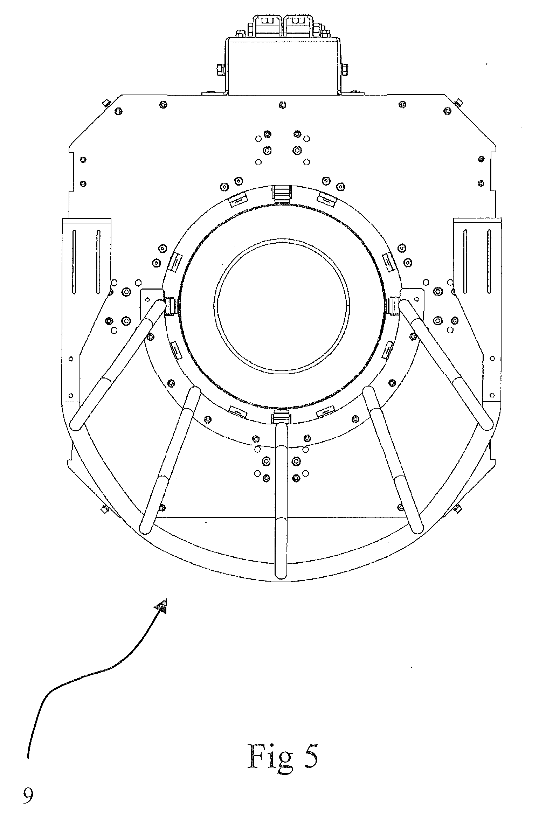

Referring to the accompanying figures, namely to Figures 1 to 6, numeral 1 generally designates an apparatus of the invention for extending and retracting a flexible and extensible tubular hose.

According to the embodiment as shown in the figures, said first tubular hose is a spiral hose comprising a cylindrical tubular wall, e.g. made of plastic, which is integrally joined to a helical support structure, preferably made of steel, e.g. stainless steel or steel music steel. As an alternative, the first tubular hose may be consist of a corrugated pipe having a different configuration.

The spiral structure or the corrugations of the first tubular hose are adapted to impart reversible extensibility to the tubular hose.

Therefore, the first tubular hose extends in an axial direction between a front end and an opposite rear end and may be reversibly deployed from an axially retracted configuration to an axially extended configuration. Due to the above mentioned reversibility, the tubular hose is collapsible from said axially extended configuration to the axially retracted configuration.

As more clearly explained hereinbelow, according to particular needs, said first tubular hose may be extended to a partial extent, without reaching the above mentioned extended configuration in which it has the intended maximum axial length, and maintains a first retracted section from the rear end, and a subsequent extended section ending with the front end.

Advantageously, the apparatus 1 of the invention comprises a support structure 3 that defines a housing adapted to axially accommodate the whole first tubular hose in its axially retracted configuration.

The support structure 3 comprises an extraction head 9 from which the front end of the first tubular hose extends with a prevailing axial section of the first tubular hose, when the first tubular hose is in said extended configuration.

Conversely, when the first tubular hose is in the above mentioned retracted configuration, the front end of the tubular hose is accommodated in the support structure 3, such that it is flush, or at the most slightly projects out of the front end of said housing, i.e. the extraction head 9.

The apparatus 1 further comprises:
- support and guide means 4, which are associated with and supported by the support structure 3 to support and guide the movements for extension and retraction of the first tubular hose;
- actuation means 5, which are associated with and supported by the support structure 3 to act by driving said first tubular hose to extension from the retracted configuration or to retraction to the retracted configuration and
- motor means 6 for rotatably driving said actuation means 5.

The above mentioned support means 4 include a plurality of blocks arranged around the first tubular hose in circumferentially spaced relation, for circumferentially and slidingly supporting it in the support structure, especially at its outlet, i.e. at the extraction head 9, where the actuation means 5 are located.

Preferably, the guide means 4 are oriented to extend parallel to the axis X-X of the first tubular hose.

It shall be noted that the extraction head 9 comprises a plurality of actuation points, arranged around said first hose in circumferentially spaced relation, with the actuation means 5 acting upon the first tubular hose to move it, at respective actuation points.

Particularly:
- said actuation means 5 comprise a plurality of drive belts 5, which are arranged at said actuation points to act by axially driving the first tubular hose from the outside,
- said motor means 6 for driving said actuation means 5 comprise a respective electric motor at each of said actuation points.

It shall be noted that the drive belt/s of a specific actuation point are actuated by their respective electric motor (6) only, the transmission belts of an actuation point not being kinematically connected by mechanical transmission means to the transmission belts of another actuation point of said plurality of actuation points.

The toothed belts are rotatably supported by respective supports having pulleys, i.e. a drive pulley and a driven pulley.

The drive belts 5 are in such position relative to the first tubular hose, that their branch contacting the outer wall of the tubular hose substantially extends parallel to the axis X-X of the first tubular hose.

Preferably, the first tubular hose is a hose having outer projections, defined by the corrugations of the spiral or by circumferential corrugations, whereas the drive pulleys 5 are toothed belts whose teeth mesh with the outer projections of the first tubular hose, to drive it relative to the extraction head 9 of the support structure 3 during extension or retraction.

Preferably, said drive belts 5 are open belts having respective opposite ends joined together by a removable clip (not shown) to form a loop. This allows each toothed belt to be removed by simply opening the clip to open the loop, without requiring dismantling of the whole belt assembly that rotatably supports the toothed belt, which comprises a drive pulley 11 and a driven pulley.

Each electric motor 6 is kinematically connected to its respective transmission belt 5 or to the transmission belts in its respective actuation point, via mechanical transmission means comprising a drive shaft 10 that rotatably drives said drive pulley 11, which drives the transmission belt 5 into rotation,

Preferably, two of said actuation points and their respective driving belt/s 5 are arranged in the extraction head 9 circumferentially around the first tubular hose to act at opposite side portions of the first tubular hose.

Preferably, one of said actuation points and its respective driving belt/s 5 are arranged in the extraction head 9 to act on the lower portion of the first tubular hose.

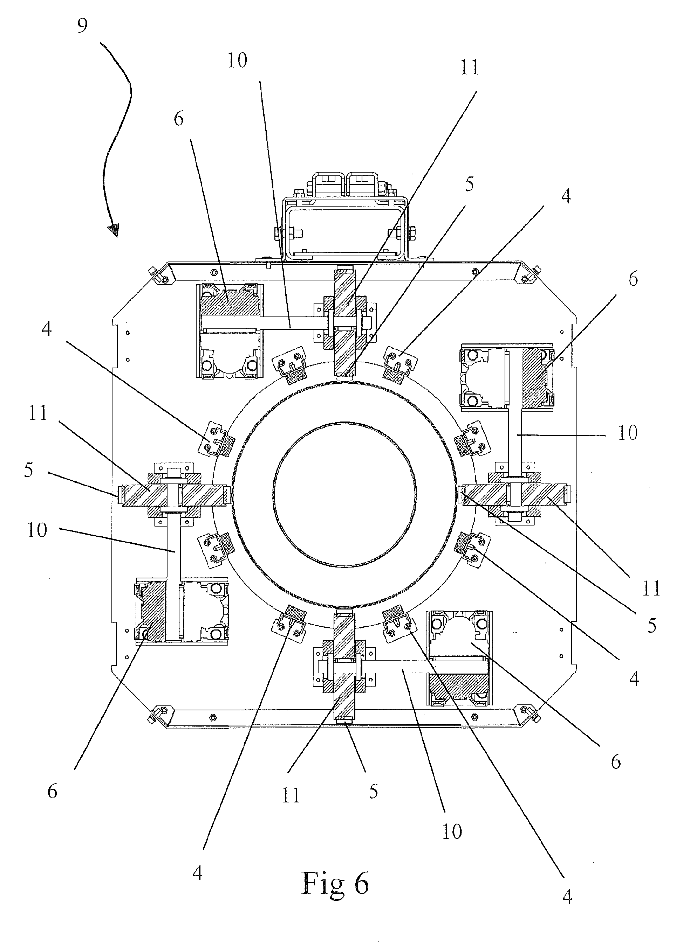

According to the illustrated embodiment, in the extraction head 9:
- two of said actuation points and their respective drive belt/s 5 are opposite to each other with respect to a plane of vertical symmetry that passes through the axis of said first tubular hose and
- two of said actuation points and their respective drive belt/s 5 are opposite to each other with respect to a plane of horizontal symmetry that passes through the axis of the first tubular hose, such that, according to the preferred embodiment as shown in Figure 6, the extraction head 9 comprises four distinct actuation points, each having an electric motor 6 actuating its respective drive belt/s in the same actuation point.

It shall be noted that each electric motor 6 is part of a gearmotor comprising the electric motor and a mechanical speed reduction unit associated therewith.

Preferably, the apparatus 1 of the invention also comprises an electronic adjustment and control unit for supervising synchronized operation of the electric motors 6 as the first tubular hose moves to extend or retract from or into the support structure 3.

Preferably, the apparatus 1 of the invention further comprises an inner tubular hose supported by the support structure 3.

Such inner tubular hose:
- is supported by the support structure 3,
- has an external bulk smaller than the interior size of the first tubular hose and is inserted in the axial section of the first tubular hose,
- axially extends substantially along the entire length of the housing defined in the support structure 3 until it comes close to the extraction head 9 from a distal end of the support structure 3 and
- has a smooth inner wall.

Preferably, at said distal end of the support structure 3, the inner tubular hose comprises a first conical section converging toward a second cylindrical rectilinear section, said second cylindrical rectilinear section being the inner tubular hose section that is inserted in the portion of the first tubular hose in its axially retracted configuration.

The inner tubular element has the function of preventing the air flow that passes through the first flexible and extensible tubular hose from flowing upon the axially retracted section of such hose, as the presence of corrugations results in turbulent motion and causes considerable pressure drops. Conversely, at the axially retracted section of the first tubular hose, the air flow conveyed into the first tubular conduit flows upon the inner wall of the inner tubular wall, which has a smooth surface and minimizes pressure drops. In such section of the tubular hose.

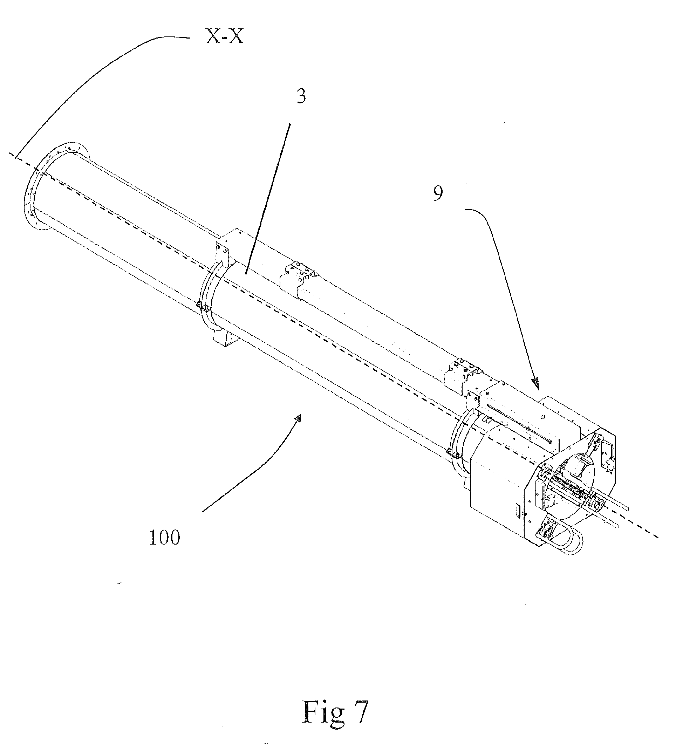

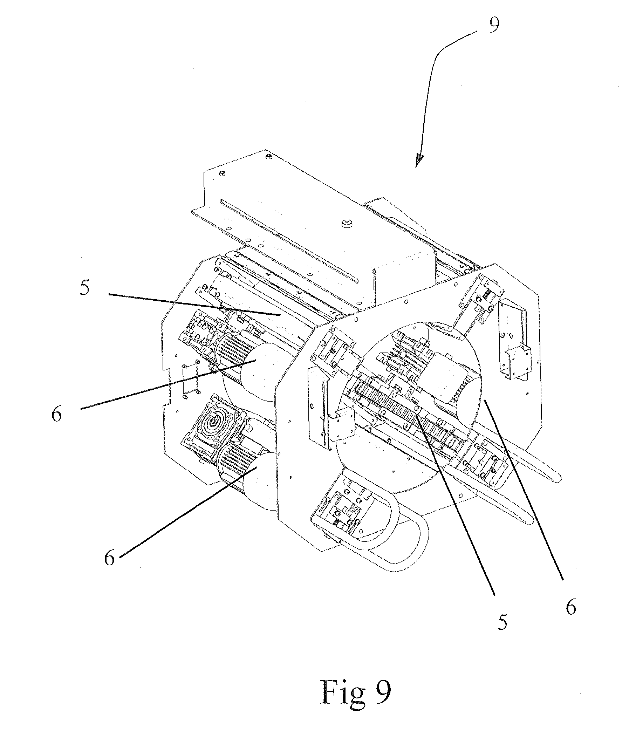

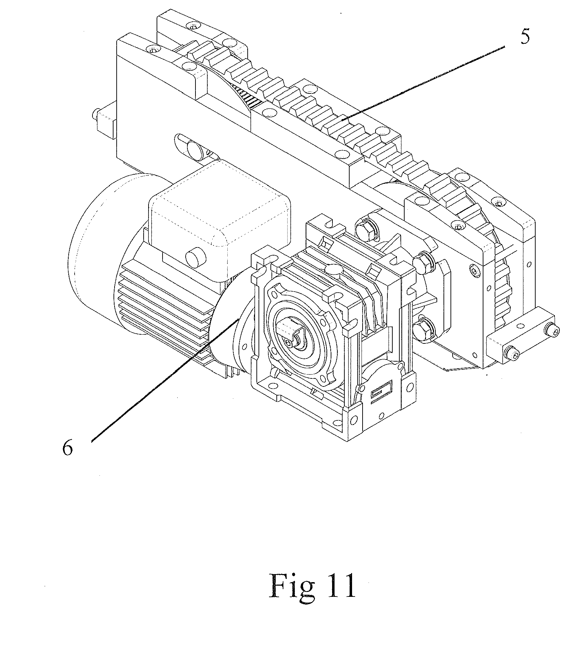

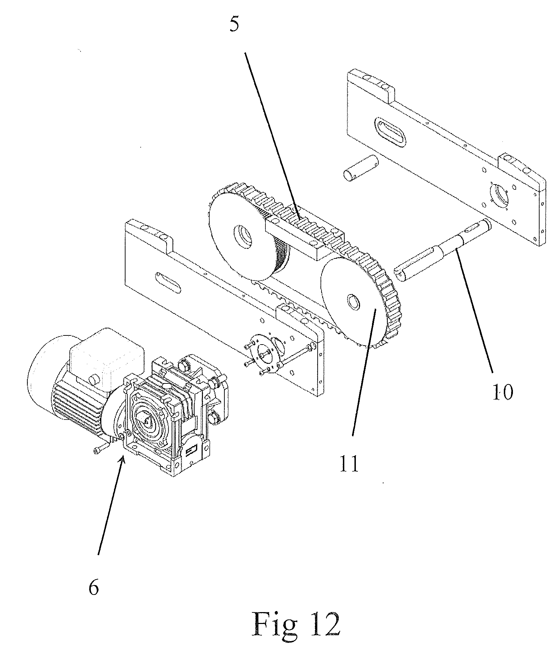

Particularly referring to Figures 7 to 12, numeral 100 generally designates an apparatus of the invention for extending and retracting a flexible and extensible tubular hose, according to a different embodiment.

For simplicity, parts of the apparatus 100 that are structurally and/or functionally equivalent to those of the apparatus 1 as described hereinbefore will be designated by the same numerals and will not be further described.

Particularly, the apparatus 100 differs from the apparatus 1 in that it provides different and optimized positions of the actuation means 5 associated with and supported by the support structure 3 as well as the motor means 6 that are used to rotatably drive said actuation means 5 via the mechanical transmission means.

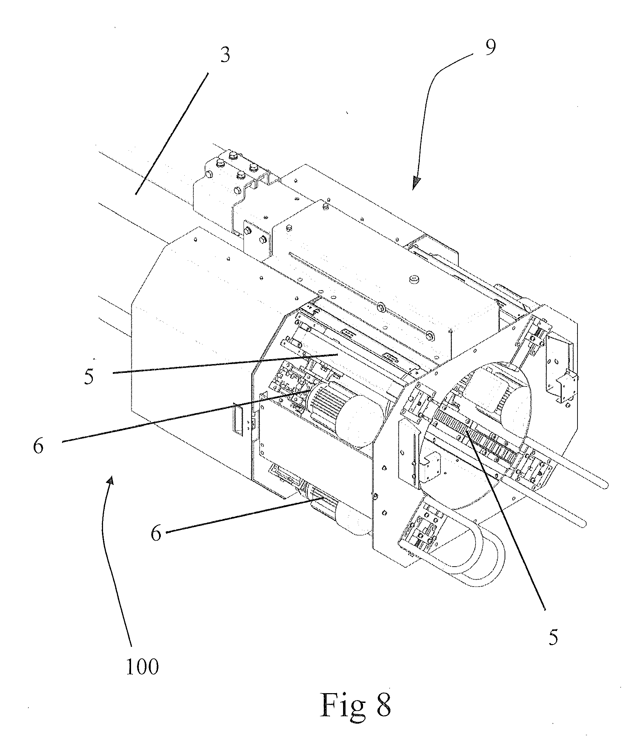

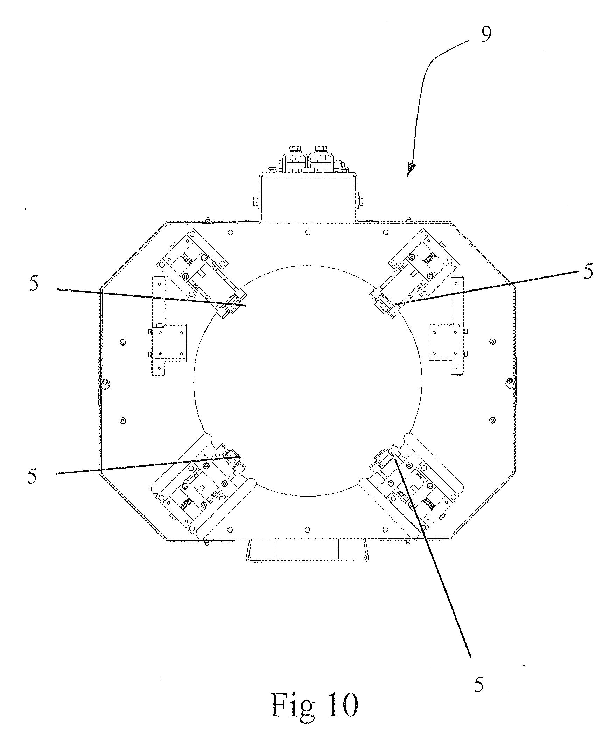

Particularly, as clearly shown in Figures 8, 9 and 10, the extraction head 9 of the apparatus 100 has four actuation points and respective drive belts 5 which, referring to a front plane of the extraction head 9, are disposed in an X arrangement, i.e. along the diagonals of a square that, in such front plane of the extraction head 9, has a side parallel to the support plane (see Figure 10).

Such arrangement of the four actuation points and their respective drive belts 5 is symmetrical with respect both to a vertical symmetry plane that passes through the axis of the first tubular hose and to a horizontal symmetry plane that passes through the axis of the first tubular hose.

Therefore, also in the embodiment of the apparatus 100, the extraction head 9 comprises four distinct actuation points, each having an electric motor 6 for actuating its respective drive belt/s in the same actuation point.

The above mentioned X arrangement along the diagonals of a square advantageously reduces the maximum exterior dimensions of the apparatus 100, assuming the same diameter of the tubular hose, and the use of the same drive means 5, motor means 6 and mechanical transmission means.

According to the invention, in both apparatus 1 and 100:
- in at least one of said actuation points of the extraction head 9 (preferably at each of said actuation points), the respective drive belts 5 and the respective motor means 6 are mounted to a slide that is movable relative to a slide guide integral with the extraction head 9, for position adjustment of the drive belts 5 and the motor means 6 of at least one (preferably the totality) of said actuation points of the extraction head 9 with respect to the first flexible tubular hose.

Also, removable fastener means are operative between the slide and the slide guide to reversibly lock each slide relative to its respective slide guide in the desired position.

Preferably, said guide extends in a substantially radial direction with respect to the axis of said first flexible tubular hose.

Thus, the extraction head 9 may be adapted to the diameter of said first flexible tubular hose, and flexible tubular hoses with different diameters may be used with a common extraction head 9. As clearly shown in the above description, the apparatus for extending and retracting a flexible and extensible hose according to the present invention fulfills the above mentioned need and also obviates prior art drawbacks as set out in the introduction of this disclosure.

Particularly, the presence of a motor, or gearmotor, for each actuation point, provides a simple and functional structure, and avoids the need of using cardan joints or other mechanical return/transmission elements which add weight and complexity to the extraction head structure, and also require registration and maintenance to ensure efficiency.

Those skilled in the art will obviously appreciate that a number of changes and variants may be made to the apparatus for extending and retracting a flexible and extensible hose as described above, in view of fulfilling particular needs, still within the scope of the invention, as defined in the following claims.

## Claims

1. Apparatus for extending and retracting a flexible and extensible hose, comprising:
- a first flexible and extensible tubular hose extending in an axial direction (X-X) between a front end and an opposite rear end, said first tubular hose being suitable to be extended to go from an axially withdrawn configuration to an axially extended configuration, and being suitable to be retracted to go from said axially extended configuration to said axially withdrawn configuration;
- a support structure (3) defining a housing to contain said first tubular hose in said axially withdrawn configuration;
- said support structure (3) comprises an extraction head (9) from which said first tubular hose projects with an axial section when said first tubular hose is in said extended configuration;
- support and guide means (4) associated with said extraction head (9) to support and guide the extending or retracting movement of said first tubular hose into or from said support structure (3);
- actuation means (5) associated with said support structure (3) to act driving on said first tubular hose and cause the extending or retracting movement of said first tubular hose and
- motor means (6) to actuate said actuation means (5);
- said support and guide means (4) comprise a plurality of guide blocks arranged circumferentially spaced around said first tubular hose to support said first tubular hose during the extending or retracting movement from or towards said support structure (3),
- said extraction head (9) comprises a plurality of actuation points arranged circumferentially spaced around said first hose,
- said actuation means (5) comprise a plurality of drive belts arranged at said actuation points to act to axially drive from the outside on said first tubular hose,
- said motor means (6) for actuating said actuation means (5) comprise a respective electric motor at each of said actuation points,
wherein the driving belt, or the driving belts, of a specific actuation point are actuated by the respective electric motor (6) only, the transmission belts of an actuation point not being kinematically connected by mechanical transmission means to the transmission belts of another actuation point of said plurality of actuation points,
**characterized in that**:
- in at least one of said actuation points of the extraction head (9), the respective drive belts and the respective motor means (6) are mounted to a slide that is movable relative to a slide guide integral with the extraction head (9) and extending in a substantially radial direction with respect to the axis of said first flexible tubular hose, for position adjustment of the drive belts (5) and the motor means (6) of at least one of said actuation points of the extraction head (9) with respect to said first flexible tubular hose and
- removable fastener means are operative between the slide and the slide guide to reversibly lock said slide relative to its respective slide guide in the desired position.

2. Apparatus according to claim 1, wherein each electric motor (6) is kinematically connected to the respective transmission belt (5) through mechanical transmission means comprising a drive shaft (10) that sets a drive pulley (11) in rotation, acting to set said transmission belt (5) in rotation.

3. Apparatus according to claim 1 or 2, wherein, in said extraction head (9), two of said actuation points and the respective driving belts (5) are arranged circumferentially around said first tubular hose to act at opposite side portions of said first tubular hose.

4. Apparatus according to any one of claims 1 to 3, wherein, in said extraction head (9), one of said actuation points and the respective driving belt (5) are arranged to act on the lower portion of said first tubular hose.

5. Apparatus according to claim 3 and 4, wherein, in said extraction head (9):
- two of said actuation points and the respective driving belts (5) are opposite one another with respect to a plane of vertical symmetry passing through the axis of said first tubular hose and
- two of said actuation points and the respective driving belts (5) are opposite one another with respect to a plane of horizontal symmetry passing through the axis of said first tubular hose.

6. Apparatus according to any one of claims 1 to 5, wherein:
- said first tubular hose is a hose equipped with external projections and
- said driving belts (5) are toothed belts, the teeth of said driving belts (5) engaging with said external projections of said first tubular hose in the extending or retracting movement of said first tubular hose with respect to said support structure (3).

7. Apparatus according to any one of claims 1 to 6, wherein said driving belts (5) are open belts having respective opposite head ends kept connected together in a loop by a removable clip.

8. Apparatus according to any one of claims 1 to 7, comprising an electronic adjustment and control unit for supervising the synchronized operation of said electric motors (6).

9. Apparatus according to any one of claims 1 to 7, wherein said support structure (3) comprises an inner tubular hose that:
- is supported by the support structure (3),
- has an external bulk smaller than the interior size of the first tubular hose and is inserted in the axial section of the first tubular hose,
- extends axially substantially for the entire length of the housing defined in the support structure (3) until it comes close to the extraction head (9) from a distal end of said support structure (3) and
- has a smooth inner wall.

10. Apparatus according to any one of claims 1 to 4, comprising four actuation points and respective drives belts (5) which, referring to a front plane of the extraction head (9), are disposed in an X arrangement, i.e. along the diagonals of a square that, in such front plane of the extraction head (9), has a side parallel to the support plane,

11. Apparatus according to claim 1 or 10, wherein:
- in each of said actuation points of the extraction head (9), the respective drive belts and the respective motor means (6) are mounted to a slide that is movable respective to a slide guide integral with the extraction head, for position adjustment of the drive belts (5) and the motor means (6) of at least one of said actuation points of the extraction head (9) with respect to said first flexible tubular hose and
at each of said actuation means, respective removable fastener means are provided, which are operative between each slide and its respective slide guide to reversibly lock the slide relative to its respective slide guide in the desired position.

## Patentansprüche

1. Vorrichtung zum Ausziehen und Zusammenziehen eines flexiblen und dehnbaren Schlauchs, umfassend:
- einen ersten flexiblen und dehnbaren röhrenförmigen Schlauch, der sich in einer axialen Richtung (X-X) zwischen einem vorderen Ende und einem entgegengesetzten hinteren Ende erstreckt, wobei dieser erste röhrenförmige Schlauch ausgezogen werden kann, um von einer axial zusammengezogenen Konfiguration zu einer axial ausgezogenen Konfiguration überzugehen, und zusammengezogen werden kann, um von der axial ausgezogenen Konfiguration zu der axial zusammengezogenen Konfiguration überzugehen;
- eine Tragkonstruktion (3), die ein Gehäuse zum Enthalten des ersten röhrenförmigen Schlauchs in der axial zusammengezogenen Konfiguration definiert;
- wobei diese Tragkonstruktion (3) einen Ausziehkopf (9) umfasst, aus dem der erste röhrenförmige Schlauch mit einem axialen Abschnitt herausragt, wenn sich der erste röhrenförmige Schlauch in der ausgezogenen Konfiguration befindet;
- Stütz- und Führungsmittel (4), die mit dem Ausziehkopf (9) verbunden sind, um die Bewegung zum Ausziehen oder Zusammenziehen des ersten röhrenförmigen Schlauchs in die oder aus der Tragkonstruktion (3) zu unterstützen und zu führen;
- Antreibmittel (5), die mit der Tragkonstruktion (3) verbunden sind, um antreibend auf den ersten röhrenförmigen Schlauch einzuwirken und die Auszieh- und Zusammenziehbewegung des ersten röhrenförmigen Schlauchs zu bewirken, und
- Motormittel (6) zum Antreiben der Antreibmittel (5);
- wobei die Stütz- und Führungsmittel (4) eine Vielzahl von Führungsblöcken umfassen, die in Umfangsrichtung beabstandet um den ersten röhrenförmigen Schlauch angeordnet sind, um den ersten röhrenförmigen Schlauch während der Auszieh- oder Zusammenziehbewegung aus der oder hin zur Tragkonstruktion (3) zu stützen,
- wobei der Ausziehkopf (9) eine Vielzahl von Antreibpunkten umfasst, die in Umfangsrichtung beabstandet um den ersten Schlauch angeordnet sind,
- wobei die Antreibmittel (5) eine Vielzahl von Treibriemen umfassen, die an den Antreibpunkten angeordnet sind, um von außen axial antreibend auf den ersten röhrenförmigen Schlauch einzuwirken,
- wobei die Motormittel (6) zum Antreiben der Antreibmittel (5) einen jeweiligen Elektromotor an jedem der Antreibpunkte umfassen, wobei der Treibriemen oder die Treibriemen eines bestimmten Antreibpunkts nur von dem jeweiligen Elektromotor (6) angetrieben wird bzw. werden, wobei die Treibriemen eines Antreibpunkts nicht mittels mechanischer Übertragungsmittel mit den Treibriemen eines anderen Antreibpunkts der Vielzahl von Antreibpunkten kinematisch verbunden sind,
**dadurch gekennzeichnet, dass**:
- an mindestens einem der Antreibpunkte des Ausziehkopfs (9) die jeweiligen Treibriemen und die jeweiligen Motormittel (6) an einen Schlitten montiert sind, der relativ zu einer Schlittenführung, die einstückig mit dem Ausziehkopf (9) ist und sich in einer im Wesentlichen radialen Richtung bezogen auf die Achse des ersten flexiblen röhrenförmigen Schlauchs erstreckt, zur Positionsjustierung der Treibriemen (5) und der Motormittel (6) von mindestens einem der Antreibpunkte des Ausziehkopfs (9) gegenüber dem ersten flexiblen röhrenförmigen Schlauch beweglich ist, und
- lösbare Befestigungsmittel zwischen dem Schlitten und der Schlittenführung wirken, um den Schlitten relativ zu seiner entsprechenden Schlittenführung in der gewünschten Position reversibel zu arretieren.

2. Vorrichtung nach Anspruch 1, wobei jeder Elektromotor (6) kinematisch mit dem entsprechenden Treibriemen (5) durch mechanische Übertragungsmittel verbunden ist, die eine Antriebswelle (10) umfassen, die eine Antriebsscheibe (11) in Drehung versetzt, die wirkt, um den Treibriemen (5) in Drehung zu versetzen.

3. Vorrichtung nach Anspruch 1 oder 2, wobei im Ausziehkopf (9) zwei der Antreibpunkte und der entsprechenden Treibriemen (5) in Umfangsrichtung um den ersten röhrenförmigen Schlauch angeordnet sind, um auf entgegengesetzte Bereiche dieses ersten röhrenförmigen Schlauchs einzuwirken.

4. Vorrichtung nach einem der Ansprüche von 1 bis 3, wobei im Ausziehkopf (9) einer der Antreibpunkte und der entsprechende Treibriemen (5) eingerichtet sind, um auf den unteren Bereich des ersten röhrenförmigen Schlauchs einzuwirken.

5. Vorrichtung nach den Ansprüchen 3 und 4, wobei im Ausziehkopf (9):
- zwei der Antreibpunkte und der entsprechenden Treibriemen (5) in Bezug auf eine durch die Achse des ersten röhrenförmigen Schlauchs verlaufende senkrechte Symmetrieebene einander gegenüberliegen, und
- zwei der Antreibpunkte und der entsprechenden Treibriemen (5) in Bezug auf eine durch die Achse des ersten röhrenförmigen Schlauchs verlaufende waagrechte Symmetrieebene einander gegenüberliegen.

6. Vorrichtung nach einem der Ansprüche von 1 bis 5, wobei:
- der erste röhrenförmige Schlauch ein mit äußeren Vorsprüngen versehener Schlauch ist, und
- die Treibriemen (5) Zahnriemen sind, wobei die Zähne dieser Treibriemen (5) bei der Auszieh- oder Zusammenziehbewegung des ersten röhrenförmigen Schlauchs in Bezug auf die Tragkonstruktion (3) in die äußeren Vorsprünge des ersten röhrenförmigen Schlauchs eingreifen.

7. Vorrichtung nach einem der Ansprüche von 1 bis 6, wobei die Treibriemen (5) offene Riemen sind, die jeweilige entgegengesetzte Stirnenden aufweisen, die durch eine lösbare Klammer miteinander verbunden gehalten werden.

8. Vorrichtung nach einem der Ansprüche von 1 bis 7, die eine elektronische Einstell- und Steuereinheit zum Überwachen des synchronisierten Betriebs der Elektromotoren (6) umfasst.

9. Vorrichtung nach einem der Ansprüche von 1 bis 7, wobei die Tragkonstruktion (3) einen inneren röhrenförmigen Schlauch umfasst, der:
- von der Tragkonstruktion (3) getragen wird,
- eine äußere Größe hat, die kleiner als die innere Größe des ersten röhrenförmigen Schlauchs ist, und in den axialen Abschnitt des ersten röhrenförmigen Schlauchs eingefügt ist,
- sich im Wesentlichen über die ganze Länge des in der Tragkonstruktion (3) definierten Gehäuses axial erstreckt, bis er von einem distalen Ende der Tragkonstruktion (3) her in die Nähe des Ausziehkopfs (9) kommt, und
- eine glatte Innenwand hat.

10. Vorrichtung nach einem der Ansprüche von 1 bis 4, die vier Antreibpunkte und entsprechende Treibriemen (5) umfasst, die, bezogen auf eine vordere Ebene des Ausziehkopfs (9), in einer X-Anordnung angeordnet sind, das heißt entlang den Diagonalen eines Quadrats, das in solch einer vorderen Ebene des Ausziehkopfs (9) eine zur Tragebene parallele Seite hat.

11. Vorrichtung nach Anspruch 1 oder 10, wobei:
- an jedem der Antreibpunkte des Ausziehkopfs (9) die jeweiligen Treibriemen und die jeweiligen Motormittel (6) an einen Schlitten montiert sind, der gegenüber einer Schlittenführung, die einstückig mit dem Ausziehkopf ist, zur Positionsjustierung der Treibriemen (5) und der Motormittel (6) von mindestens einem der Antreibpunkte des Ausziehkopfs (9) gegenüber dem ersten flexiblen röhrenförmigen Schlauch beweglich ist, und
- an jedem der Antreibmittel jeweilige lösbare Befestigungsmittel vorgesehen sind, die zwischen jedem Schlitten und seiner entsprechenden Schlittenführung wirken, um den Schlitten relativ zu seiner entsprechenden Schlittenführung in der gewünschten Position reversibel zu arretieren.

## Revendications

1. Appareil pour la sortie et le retrait d'un tuyau flexible et extensible, comprenant :
- un premier tuyau tubulaire flexible et extensible s'étendant dans une direction axiale (X-X) entre une extrémité avant et une extrémité arrière opposée, ledit premier tuyau tubulaire étant adapté pour être sorti pour passer d'une configuration axialement retirée à une configuration axialement sortie et étant adapté pour être retiré pour passer de ladite configuration axialement sortie à ladite configuration axialement retirée ;
- une structure de support (3) définissant un logement pour contenir ledit premier tuyau tubulaire dans ladite configuration axialement retirée ;
- ladite structure de support (3) comprend une tête d'extraction (9) de laquelle ledit premier tuyau tubulaire fait saillie avec une section axiale quand ledit tuyau tubulaire est dans ladite configuration axialement sortie ;
- des moyens de support et de guidage (4) associés à ladite tête d'extraction (9) pour supporter et guider le mouvement de sortie ou de retrait dudit premier tuyau tubulaire hors de ou dans ladite structure de support (3) ;
- des moyens d'actionnement (5) associés à ladite structure de support (3) pour agir comme un entraînement sur ledit premier tuyau tubulaire et provoquer le mouvement de sortie ou de retrait dudit premier tuyau tubulaire et
- des moyens de motorisation (6) pour actionner lesdits moyens d'actionnement (5) ;
- lesdits moyens de support et de guidage (4) comprennent une pluralité de blocs de guidage disposés espacés de manière circonférentielle autour dudit premier tuyau tubulaire pour supporter ledit premier tuyau tubulaire durant le mouvement de sortie ou de retrait de ou vers ladite structure de support (3),
- ladite tête d'extraction (9) comprend une pluralité de points d'actionnement disposés espacés de manière circonférentielle autour dudit premier tuyau,
- lesdits moyens d'actionnement (5) comprennent une pluralité de courroies d'entraînement agencées au niveau desdits points d'actionnement pour agir pour entraîner axialement de l'extérieur sur ledit premier tuyau tubulaire,
- lesdits moyens de motorisation (6) pour actionner lesdits moyens d'actionnement (5) comprennent un moteur électrique respectif au niveau de chacun desdits points d'actionnement,
dans lequel la courroie d'entraînement ou les courroies d'entraînement d'un point d'actionnement spécifique sont actionnées seulement par le moteur électrique respectif (6), le courroies de transmission d'un point d'actionnement n'étant pas connectées cinématiquement par des moyens de transmission mécaniques aux courroies de transmission d'un autre point d'actionnement de ladite pluralité de points d'actionnement,
**caractérisé en ce que :**
- dans au moins un desdits points d'actionnement de la tête d'extraction (9), les courroies d'entraînement et les moyens de motorisation respectifs (6) sont montés sur une glissière qui est mobile par rapport à un guide à glissière solidaire de la tête d'extraction (9) et s'étendant dans une direction sensiblement radiale par rapport à l'axe dudit premier tuyau tubulaire flexible, pour un réglage de position des courroies d'entraînement (5) et des moyens de motorisation (6) d'au moins un desdits points d'actionnement de la tête d'extraction (9) par rapport audit premier tuyau tubulaire flexible et
- des moyens de fixation amovible sont fonctionnels entre la glissière et le guide à glissière pour bloquer de manière réversible ladite glissière par rapport à son guide à glissière respectif dans la position désirée.

2. Appareil selon la revendication 1, dans lequel chaque moteur électrique (6) est connecté cinématiquement à la courroie de transmission respective (5) par l'intermédiaire de moyens de transmission mécaniques comprenant un arbre moteur (10) qui met en rotation une poulie motrice (11), agissant pour mettre en rotation ladite courroie de transmission (5).

3. Appareil selon la revendication 1 ou 2, dans lequel, dans ladite tête d'extraction (9), deux desdits points d'actionnement et les courroies de transmission respectives (5) sont disposés de manière circonférentielle autour dudit premier tuyau tubulaire pour agir au niveau de portions latérales opposées dudit premier tuyau tubulaire.

4. Appareil selon l'une quelconque des revendications 1 à 3, dans lequel, dans ladite tête d'extraction (9), un desdits points d'actionnement et la courroie de transmission respective (5) sont disposés pour agir sur la portion inférieure dudit premier tuyau tubulaire.

5. Appareil selon les revendications 3 et 4, dans lequel, dans ladite tête d'extraction (9) :
- deux desdits points d'actionnement et les courroies de transmission respectives (5) sont opposés l'un à l'autre par rapport à un plan de symétrie vertical passant par l'axe dudit premier tuyau tubulaire et
- deux desdits points d'actionnement et les courroies de transmission respectives (5) sont opposés l'un à l'autre par rapport à un plan de symétrie horizontal passant par l'axe dudit premier tuyau tubulaire.

6. Appareil selon l'une quelconque des revendications 1 à 5, dans lequel :
- ledit premier tuyau tubulaire est un tuyau équipé de saillies externes et
- lesdites courroies d'entraînement (5) sont des courroies dentées,
les dents desdites courroies d'entraînement (5) s'engageant avec lesdites saillies externes dudit premier tuyau tubulaire dans le mouvement de sortie ou de retrait dudit premier tuyau tubulaire par rapport à ladite structure de support (3).

7. Appareil selon l'une quelconque des revendications 1 à 6, dans lequel lesdites courroies d'entraînement (5) sont des courroies ouvertes ayant des extrémités de tête opposées respectives maintenues connectés ensemble en une boucle par une attache amovible.

8. Appareil selon l'une quelconque des revendications 1 à 7, comprenant une unité électronique de réglage et de commande pour superviser le fonctionnement synchronisé desdits moteurs électriques (6).

9. Appareil selon l'une quelconque des revendications 1 à 7, dans lequel ladite structure de support (3) comprend un tuyau tubulaire intérieur qui :
- est supporté par la structure de support (3),
- a un volume extérieur inférieur à la dimension intérieure du premier tuyau tubulaire et est inséré dans la section axiale du premier tuyau tubulaire,
- s'étend axialement sensiblement sur toute la longueur du logement défini dans la structure de support (3) jusqu'à ce qu'il se rapproche de la tête d'extraction (9) à partir d'une extrémité distale de ladite structure de support (3) et
- a une paroi intérieure lisse.

10. Appareil selon l'une quelconque des revendications 1 à 4, comprenant quatre points d'actionnement et des courroies de transmission respectives (5) qui, en faisant référence à un plan frontal de la tête d'extraction (9), sont disposés dans un agencement en X, c'est-à-dire le long des diagonales d'un carré qui, dans ce plan frontal de la tête d'extraction (9), a un côté parallèle au plan de support.

11. Appareil selon la revendication 1 ou 10, dans lequel :
- dans chacun desdits points d'actionnement de la tête d'extraction (9), les courroies de transmission respectives et les moyens de motorisation respectifs (6) sont montés sur une glissière qui est mobile par rapport à un guide à glissière solidaire de la tête d'extraction, pour un réglage de position des courroies d'entraînement (5) et des moyens de motorisation (6) d'au moins un desdits points d'actionnement de la tête d'extraction (9) par rapport audit premier tuyau tubulaire flexible et
- pour chacun desdits moyens d'actionnement, des moyens de fixation amovibles respectifs sont prévus, lesquels sont fonctionnels entre chaque glissière et son guide à glissière respectif pour bloquer de manière réversible la glissière par rapport à son guide à glissière respectif dans la position désirée.
